Europäisches Patentamt

European Patent Office

Office européen des brevets

(19)
(11) Veröffentlichungsnummer: **0 255 605 B1**

# (12) EUROPÄISCHE PATENTSCHRIFT

(45) Veröffentlichungstag der Patentschrift: **07.04.93**

(21) Anmeldenummer: **87109307.6**

(22) Anmeldetag: **29.06.87**

(51) Int. Cl.⁵: **C09K 7/02**

(54) **Pulverförmige Schmiermittel-Additive für Bohrspülungen auf Wasserbasis.**

(30) Priorität: **08.07.86 DE 3622826**

(43) Veröffentlichungstag der Anmeldung:
**10.02.88 Patentblatt 88/06**

(45) Bekanntmachung des Hinweises auf die
Patenterteilung:
**07.04.93 Patentblatt 93/14**

(84) Benannte Vertragsstaaten:
**DE**

(56) Entgegenhaltungen:
**US-A- 3 810 836**
**US-A- 4 137 367**
**US-A- 4 356 096**

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Müller, Heinz
Engelhöhe 48
W-5600 Wuppertal 11(DE)**
Erfinder: **Herold, Claus-Peter, Dr.
Ostpreussenstrasse 26
W-4020 Mettmann(DE)**

**Beschreibung**

Die Erfindung betrifft pulverförmige Schmiermittel-Additive und deren Verwendung für Bohrspülungen auf Wasserbasis im Erdöl- bzw. Bergbau-Drillingbereich.

Beim Einbringen von Bohrungen, speziell im Erdöl-/Drillingbereich, werden heutzutage an die verwendeten Bohrflüssigkeiten hohe Anforderungen gestellt. Die Bohrflüssigkeiten, die aus Kostengründen üblicherweise Wasser als Hauptbestandteil enthalten, haben gleichzeitig mehrere Funktionen zu erfüllen, wobei deren Gesamtqualität danach beurteilt wird, ob sie in der Lage sind, ein Optimum aller Anforderungen zu erfüllen.

Eine der wichtigsten Funktionen einer Bohrspülung ist das Austragen des durch den Meißel freigesetzten sogenannten "Bohrkleins", also das feste abgeriebene Material an die Oberfläche zu befördern. Bohrflüssigkeiten mit zu geringer Viskosität sind nicht in der Lage, das Bohrklein auszutragen. Ein weiteres, wenn nicht das wichtigste Erfordernis ist die Kühlung und Schmierung des Bohrmeißels und des Bohrgestänges Letzteres Erfordernis gewinnt insbesondere bei Bohrlöchern größerer Tiefen dadurch besondere Bedeutung, daß das Bohrgestänge aufgrund der geologischen Formationen nicht immer "gerade" geführt werden kann, sondern sogenannte "abgelenkte Bohrungen" entstehen, so daß das Bohrgestänge in mechanischen Kontakt mit den Gesteinsformationen kommt und bei den üblicherweise auftretenden hohen Umdrehungsgeschwindigkeiten relativ schnell verschleißt. Eine gute Schmierung durch eine geeignete Bohrspülung erhöht die Standzeit des Bohrmeißels und des Bohrgestänges; nicht nur durch eine Verschleißminderung, sondern auch durch die entfallenden Zeiten für die Auswechslung des Bohrmeißels und/oder des Bohrgestänges lassen sich wirtschaftliche Vorteile erzielen.

Um die oben genannten Aufgaben zu erfüllen, wurden Bohrflüssigkeiten unterschiedlichster Zusammensetzungen eingesetzt. So war es lange Zeit üblich, Bohrflüssigkeiten Mineralöl als Schmierzusatz in Mengen von 5 bis 10 Gew.-% zuzusetzen. In der Folge kam es zu erheblichen Grundwasserverschmutzungen, so daß Mineralöle als Schmiermittelzusätze in Bohrspülungen nicht mehr zugelassen sind. Außerdem wurde vorgeschlagen, ein Triglycerid-Alkohol-Gemisch zur Verringerung des Drehmoments in Bohrspülungen einzusetzen. Dieses Gemisch hat aber nicht die gewünschte schmierende Wirksamkeit und verursacht zudem ein lästiges Schäumen der Bohrflüssigkeit.

Außerdem wurde in großem Umfang Tallöl in Bohrspülungen verwendet. In Emulsionsbohrspülungen, sowohl bei Öl-in-Wasser- als auch bei Wasser-in-Öl-Systemen dient es als Emulgator. So wird beispielsweise in der DE-B-22 24 959 die Verwendung einer Tallölfraktion mit hohem Harzsäuregehalt als Schmiermittel für wäßrige Bohrspülungen vorgeschlagen, wobei diese Tallölfraktion einen Fettsäure- bzw. Ölgehalt von maximal 20 % haben soll. Zwar ließ sich damit eine verbesserte biologische Abbaubarkeit erreichen und das vorher bekannte lästige Schäumen deutlich reduzieren; die genannten Mittel waren jedoch bei der Verwendung von Hochgeschwindigkeits-Bohrmeißeln hinsichtlich ihrer schmierenden Eigenschaften unzureichend und erfüllten nicht die an sie gestellten Anforderungen.

In den US-A- 3 810 836, 3 840 460 und 4 064 055 werden flüssige Bohrspülungsadditive beschrieben, die im wesentlichen aus paraffinischen Ölen und geschwefelten Ölen sowie hochmolekularen Fettsäureestern als Emulgatoren bestehen; die US-A- 4 064 055 gibt als weiteren Zusatz einen Alkylester eines Oxazolidinderivats an. Die genannten Additive konnten zwar hinsichtlich der Kühl- und Schmiereigenschaften für das Bohrgestänge und den Bohrmeißel befriedigen, haben jedoch den wesentlichen Nachteil, daß sie wegen des relativ hohen Stockpunktes bei tiefen Temperaturen fest werden und in- der Folge nur sehr schwer zu dosieren bzw. bei tiefen Temperaturen nur sehr schwer in die eigentliche Bohrflüssigkeit einzubringen sind. Die Folge ist eine den aktuellen Erfordernissen nicht gerecht werdende Überdosierung, die auch ökonomische Nachteile mit sich bringt.

Die vorliegende Erfindung stellte sich die Aufgabe, Schmiermittel-Additive für Bohrspülungen auf Wasserbasis, insbesondere für die Verwendung im Erdöl- bzw. Bergbau-Drillingbereich zur Verfügung zu stellen, die in der Handhabung selbst bei extremen Temperaturen problemlos sind, d.h. jederzeit einfach zudosiert und homogen in der Bohrflüssigkeit verteilt werden können. Diese Handhabbarkeit sollte im Temperaturbereich zwischen -40 und +80°C gewährleistet sein. In diesem Temperaturbereich sollte das Additiv zudem für eine Verbesserung der Schmierung von Bohrmeißel und -gestänge sorgen, damit es bei mechanischem Kontakt zwischen der Wand des Bohrlochs und den Metallteilen auf Dauer nicht zu einem Metallabrieb kommt. Zudem sollten die rheologischen Eigenschaften der Bohrflüssigkeit nicht verändert und damit ein zufriedenstellendes Austragen des Bohrkleins weiter gewährleistet sein. Die biologische Abbaubarkeit der für die Bohrspülung verwendeten Flüssigkeit sollte zudem nicht beeinträchtigt werden.

Es wurde nun überraschend gefunden, daß ein neues, in Pulverform konfektioniertes Schmiermitteladditiv für Bohrspülungen auf Wasserbasis die oben genannten Erfordernisse ausnahmslos erfüllt.

Die Erfindung betrifft pulverförmige Schmiermittel-Additive für Bohrspülungen auf Wasserbasis, die dadurch gekennzeichnet sind, daß sie 95 bis 30 Gew.-%, bezogen auf das Gesamtgewicht des Pulvers, hochdisperse Kieselsäuren, 5 bis 70 Gew.-%, bezogen auf das Gesamtgewicht des Pulvers, eines oder mehrerer Fettsäurealkylester der allgemeinen Formel (I)

$R^1COOR^2$    (I)

in der

R$^1$    für einen geradkettigen oder verzweigten, gesättigten oder einfach oder mehrfach ungesättigten Alkyl- oder Alkenylrest mit 11 bis 17 C-Atomen und

R$^2$    für einen geradkettigen oder verzweigten Alkylrest mit 1 bis 8 C-Atomen steht,

und/oder durch Umsetzung eines oder mehrerer mehrfunktioneller Hydroxyverbindungen aus der Gruppe Ethylenglykol, Propylenglykol, Glycerin, Trimethylolethan, Trimethylolpropan, Pentaerythrit, Sorbit, durch Selbstkondensation von Glycerin unter Wasserabspaltung hertellbare Polyole und Umsetzungsprodukte dieser Hydroxyverbindungen mit Ethylenoxid und/oder Propylenoxid, mit einer oder mehreren Carbonsäuren der allgemeinen Formel (II)

RCOOH

in welcher R für einen geradkettigen oder verzweigten, gesättigten bzw. einfach oder mehrfach ungesättigten Alkyl- bzw. Alkenylrest mit 5 bis 21 C-Atomen steht, erhältliche Polyolester, und/oder Destillationsrückstände aus der Umesterung nativer Fettsäureester, und gegebenenfalls weitere, für Schmierzwecke bekannte Zusätze in Mengen von 0 bis 20 Gew.-%, bezogen auf das Gesamtgewicht des Pulvers, enthalten.

Die Erfindung betrifft außerdem die Verwendung der genannten pulverförmigen Additive in Bohrspülungen im Erdöl- bzw. Bergbau-Drillingbereich in Mengen von 0,01 bis 5 Gew.-%, bezogen auf das Gesamtgewicht der Spülung.

In der folgenden Beschreibung und den Beispielen sind alle Prozentangaben, soweit nicht ausdrücklich anders gekennzeichnet, Angaben in Gewichtsprozent.

Die erfindungsgemäßen pulverförmigen Schmiermittel-Additive für Bohrspülungen auf Wasserbasis enthalten als einen Bestandteil hochdisperse Kieselsäuren in Mengen von 95 bis 30 Gew.-%, bevorzugt in Mengen von 60 bis 40 Gew.-%, bezogen auf das Gesamtgewicht des Additivpulvers. Derartige hochdisperse Kieselsäuren sind aus dem Stand der Technik bekannt. Es werden darunter beispielsweise Fällungskieselsäuren verstanden, die auf naßchemischem Wege aus Alkalimetallsilikat-Lösungen durch Umsetzung mit Mineralsäuren erhalten werden. Hochdisperse Kieselsäuren sind auch pyrogene bzw. pyrogen-hydrophobierte Kieselsäuren. Unter pyrogenen bzw. pyrogen-hydrophobierten Kieselsäuren werden allgemein solche hochdispersen Kieselsäuren verstanden, die bei hohen Temperaturen durch Koagulation aus der Gasphase gewonnen werden. Dies geschieht üblicherweise durch Flammen- oder Hochtemperaturpyrolyse Für die erfindungsgemäßen Hochdruckschmiermittel sind jedoch auch auf andere Weise hergestellte hochdisperse Kieselsäuren geeignet.

Die verwendbaren hochdispersen Kieselsäureprodukte lassen sich auf an sich bekannte, beispielsweise auf die in "Ullmanns Enzyklopädie der technischen Chemie", Band 21, Seite 463 beschriebene Art und Weise charakterisieren. Die Teilchen haben dann einen Durchmesser von im Durchschnitt 5 bis 50 nm und eine Oberfläche von 50 bis 300 m$^2$/g.

Die erfindungsgemäßen pulverförmigen Schmiermittel-Additive für Bohrspülungen auf Wasserbasis enthalten als weiteren Bestandteil 5 bis 70 Gew.-%, bevorzugt 40 bis 60 Gew.-% eines oder mehrerer Fettsäurealkylester der allgemeinen Formel (I)

$R^1COOR^2$    (I)

In der genannten allgemeinen Formel (I) steht R$^1$ für einen geradkettigen oder verzweigten, gesättigten oder einfach oder mehrfach ungesättigten Alkyl- oder Alkenylrest mit 11 bis 17 C-Atomen. R$^1$ kann also für geradkettige Undecyl-, Dodecyl-, Tridecyl-, Tetradecyl-, Pentadecyl-, Hexadecyl-, Heptadecylreste oder deren verzweigte Isomere stehen. Anstelle der gesättigten Alkylreste können auch einfach oder mehrfach ungesättigte Alkenylrest für R$^1$ in der genannten allgemeinen Formel (I) stehen. Mit besonderem Vorteil, d.h. beispielsweise aufgrund ihrer leichten, preiswerten Verfügbarkeit, lassen sich Fettsäureester aus Fettsäuren verwenden, die aus nativen Quellen zugänglich sind. Als solche kommen beispielsweise Fettsäureester in Frage, die Alkylreste R$^1$ aus dem Bereich der Kokosalkyl- oder Talgalkylbereiche enthalten. Derartige Fettsäureester (R$^1$) sind in der Regel keine Reinsubstanzen, sondern Substanzgemische aus einem mehr

3

oder minder großen Bereich, dessen Größe von der jeweiligen Quelle des als Edukt verwendeten Fettes oder Öles abhängig ist.

In der oben genannten allgemeinen Formel (I) steht der Rest $R^2$ für einen geradketigen oder verzweigten Alkylrest mit 1 bis 8 C-Atomen. $R^2$ kann also für geradkettige Reste aus der Gruppe Methyl, Ethyl, Propyl, Butyl, Pentyl, Hexyl, Heptyl, Octyl stehen. Mit gleichem Erfolg sind auch verzweigte Alkylreste $R^2$ aus der oben genannten Gruppe verwendbar. Bevorzugt werden Fettsäureester (I), in denen $R^2$ für die Reste Methyl, Ethyl, n-Propyl und i-Propyl steht.

Als Esterkomponente der erfindungsgemäßen pulverförmigen Schmiermittel-Additive sind auch zusammen mit oder anstelle von Fettsäurealkylestern der allgemeinen Formel (I) Polyolester geeignet, die durch Umsetzung einer oder mehrerer mehrfunktioneller Hydroxyverbindungen aus der Gruppe Ethylenglykol, Propylenglykol, Glycerin, Trimethylolethan, Trimethylolpropan, Pentaerythrit, Sorbit, durch Selbstkondensation von Glycerin unter Wasserabspaltung herstellbare Polyole sowie Umsetzungsprodukte der genannten Hydroxyverbindungen mit Ethylenoxid und/oder Propylenoxid, mit einer oder mehreren Carbonsäuren der allgemeinen Formel (II)

RCOOH

in welcher R für einen geradkettigen oder verzweigten, gesättigten bzw. einfach oder mehrfach ungesättigten Alkyl- bzw. Alkenylrest mit 5 bis 21 C-Atomen steht, erhältlich sind. Die aus den genannten mehrfunktionellen Hydroxyverbindungen und Carbonsäuren erhältlichen Polyolester können als Esterkomponente in den erfindungsgemäßen pulverförmigen Additiven als Einzelsubstanzen, Substanzgemische von Polyolestern miteinander oder auch mit den Fettsäurealkylester-Komponenten der obigen allgemeinen Formel (I) in beliebigen Mischungsverhältnissen eingesetzt werden. Die erfindungsgemäß verwendbaren Polyolester aus mehrfunktioneller Hydroxyverbindung und Carbonsäure werden auf an sich bekannten Wegen, beispielsweise durch übliche Veresterungsreaktionen bei erhöhten Reaktionstemperaturen unter Abschleppen des durch die Kondensationsreaktion gebildeten Reaktionswassers, hergestellt; die Herstellung der erfindungsgemäß verwendbaren Polyolester ist im Stand der Technik beschrieben und nicht Gegenstand der vorliegenden Erfindung.

Als Fettsäurealkylester-Komponente der erfindungsgemäßen, pulverförmigen Schmiermittel-Additive für Bohrspülungen auf Wasserbasis können anstelle von oder zusammen mit den genannten Fettsäurealkylestern der allgemeinen Formel (I) und/oder Polyolestern auch Destillationsrückstände aus der Umesterung nativer Fettsäureester verwendet werden. Unter derartigen Destillationsrückständen werden im Rahmen der vorliegenden Erfindung diejenigen Destillationsrückstände verstanden, die bei der Destillation von Rohfettsäurealkylestern abgetrennt werden, die nach einer Umesterung nativer Öle oder Fette oder nach Spaltung nativer Öle oder Fette und anschließender Veresterung der entstandenen Spaltfettsäuren als Rohprodukte entstehen. Derartige Fettsäurealkylester-Destillationsrückstände bestehen in der Regel aus schwer destillierbaren höheren Fettsäurealkylestern bzw. deren Gemischen, die zusammen mit oder anstelle von Fettsäurealkylestern der obigen allgemeinen Formel (I) im relativen Gewichtsverhältnis von 0 : 100 bis 100 : 0 Gew.-Teilen verwendet werden können.

Außer den bisher genannten Komponenten, nämlich Kieselsäuren und Fettsäurealkylestern bzw. Polyolestern bzw. deren Gemischen, können die erfindungsgemäßen pulverförmigen Schmiermittel-Additive für Bohrspülungen auf Wasserbasis gegebenenfalls noch weitere, für Schmierzwecke an sich bekannte Zusätze enthalten, deren Mengen üblicherweise im Bereich von 0 bis 20 Gew.-%, bezogen auf das Gesamtgewicht des Pulvers, betragen. Als solche gegebenenfalls enthaltene Zusätze sind beispielsweise Metallseifen, geschwefelte Fettsäuren und deren Derivate und geblasene Öle zu nennen, wobei die genannten Komponenten einzeln oder auch in beliebigen Mengenverhältnissen zueinander in Mischungen verwendet werden können. Als verwendbare Metallseifen haben sich besonders Aluminiumstearat, Calciumstearat und Magnesiumstearat bewährt. Es können anstelle dessen oder auch zusammen mit den genannten Metallseifen auch geschwefelte Fettsäuren und deren Derivate zusätzlich beigegeben werden; derartige Zusätze sind allgemein unter dem Namen "EP-Additive" bekannt und umfassen Polysulfid-Brücken enthaltende organische Verbindungen, überwiegend geschwefelte Öle nativer Herkunft, wie beispielsweise geschwefeltes Rüböl, geschwefeltes Baumwollsamenöl, geschwefeltes Sojaöl usw. oder geschwefelte Alkylester natürlicher Fettsäuren, wie sie allgemein als Hochdruckschmiermittel-Zusätze verwendet werden. Anstelle der genannten Komponenten können jedoch auch sogenannte "geblasene Öle" verwendet werden. Darunter werden üblicherweise Öle und Fette nativer Herkunft verstanden, durch die bei erhöhter Temperatur Luft bzw. sauerstoffhaltige Gasgemische geblasen wurden.

Die Herstellung der erfindungsgemäßen, pulverförmigen Schmiermittel-Additive für Bohrspülungen auf Wasserbasis erfolgt in an sich bekannter Weise dadurch, daß man die einzelnen Komponenten in den

EP 0 255 605 B1

gewünschten Mengenverhältnissen miteinander mischt. Dies kann mit Hilfe von üblichen Mischapparaturen geschehen und ist dem Fachmann auf diesem Gebiet geläufig. Dabei ist darauf zu achten, daß die Fettsäurealkylester- bzw. Polyolester-Komponenten mit den hochdispersen, beispielsweise den pyrogenen bzw. pyrogen-hydrophobierten Kieselsäuren bei Raumtemperatur oder Temperaturen bis maximal 60°C zu einer einheitlichen physikalischen Mischung verarbeitet werden. Die gegebenenfalls zusetzbaren Schmierzusätze können gleichzeitig damit oder auch in einem nachgeschalteten Arbeitsgang in die physikalische Mischung aus Kieselsäuren und Fettsäurealkylestern bzw. Polyolestern bzw. deren Mischungen eingearbeitet werden.

Die resultierenden Produkte werden in Form eines feinen, rieselfähigen und damit bei jeder Temperatur gleich gut dosierbaren Pulvers enthalten. Allein in der Pulverform liegt schon ein wesentlicher Vorteil der erfindungsgemäßen Additive gegenüber den bisher für diesen Zweck bekannten Additiven, da Probleme mit der Zudosierung bzw. Einarbeitung des Additivs in die Bohrspülungen in keinem Fall auftreten. Damit ist gewährleistet, daß in dem gewünschten Temperaturbereich zwischen -40 und +80°C eine gute Handhabung durch einfaches Zudosieren und gutes Einmischen in die Bohrspülungen erfolgen kann.

Die erfindungsgemäßen pulverförmigen Additive lassen sich in Bohrspülungen im Erdöl- bzw. Bergbau-Drillingbereich in Mengen von 0,01 bis 5 Gew.-%, bezogen auf das Gesamtgewicht der Bohrspülung, einsetzen. Mit besonderem Vorteil geschieht dies in Bohrspülungen, die im Bereich von Erdölbohrungen Verwendung finden. Besonders vorteilhafte Mengenbereiche der Additive in den Bohrspülungen liegen im Bereich von 0,1 bis 2 Gew.-%, bezogen auf das Gesamtgewicht der Spülung. In diesen Mengenbereichen gewährleisten die erfindungsgemäßen pulverförmigen Schmiermittel-Additive für Bohrspülungen auf Wasserbasis, daß sich die rheologischen Eigenschaften der überwiegend wasserhaltigen Bohrspülungen nicht verändern und deswegen das Ausbringen des Bohrkleins in zumindest unverändert guter, wenn nicht gar besserer Weise möglich ist. Außerdem gewährleisten die Additive eine gegenüber Additivfreien Bohrspülungen verbesserte Schmierung des Bohrgestänges und -meißels dadurch, daß sie auf den Metallteilen einen gut schmierenden Film bilden. Aufgrund der natürlichen Inhaltsstoffe der erfindungsgemäßen pulverförmigen Additive ist außerdem eine biologische Abbaubarkeit in vollem Umfang gewährleistet. Daraus ergibt sich, daß die erfindungsgemäßen pulverförmigen Additive für Bohrspülungen auf Wasserbasis im gesamten On- und Offshore-Bereich mit Vorteil einsetzbar sind.

Die Erfindung wird durch die nachfolgenden Beispiele näher erläutert.

Die Güte der Schmiereigenschaften verschiedener mit den erfindungsgemäßen pulverförmigen Schmiermittel-Additiven angereicherter Bohrspülungen wurde auf der sogenannten "Reichert-Reibverschleißwaage" durchgeführt. Bei diesem Reibungsprüfgerät wird über ein Doppelhebelsystem eine fest eingespannte Prüfrolle an einen umlaufenden Schleifring angepreßt, welcher mit seinem unteren Drittel in die auf ihre Schmiereigenschaften zu prüfende Flüssigkeit taucht. Bei umlaufendem Schleifring entstehen, je nach Schmiervermögen der Flüssigkeit, auf der prüfrolle Abschliff-Flächen, d.h. elliptische Verschleißmarken, deren Größe vom Schmiervermögen der geprüften Flüssigkeit abhängt. Das Schmiervermögen ist umso größer, je kleiner nach einer bestimmten Laufzeit (bzw. Laufstrecke des Schleifrings, 100 m des Umfangweges des Schleifringes) die elliptische Verschleißmarke ist.

Es wurden folgende Prüfbedingungen für das Gerät eingestellt:

| | |
|---|---|
| Flüssigkeitsmenge: | 35 ml; |
| Prüfkörper: | Ring und Rolle, Achsen gekreuzt; |
| Gleitgeschwindigkeit: | 1,7 m/sec; |
| Testdauer: | 100 m Laufstrecke (ca. 1 min); |
| Probenmaterial: | gehärteter Stahl; |
| Normallast: | bei Belastungsgewicht von 1500 p im Ruhestand 15 000 kp/cm$^2$ (Hertz'sche Pressung) und |
| Reibungsart: | Gleitreibung. |

Vergleichsbeispiele 1 bis 5

Mit Hilfe der Reichert-Reibverschleißwaage wurde bei den oben angegebenen Bedingungen die Abriebfläche auf der Prüfrolle bestimmt, wobei als Prüfflüssigkeit
- im Vergleichsbeispiel 1 Leitungswasser (16°dH),
- im Vergleichsbeispiel 2 die jeweilige Bohrspülung ohne erfindungsgemäßes Additiv,
- im Vergleichsbeispiel 3 die jeweilige Bohrspülung nur mit pyrogener Kieselsäure,

- im Vergleichsbeispiel 4 die jeweilige Bohrspülung nur mit Tallölfettsäure (flüssiges Additiv nach dem Stand der Technik) und
- im Vergleichsbeispiel 5 das jeweilige Testmedium nur mit einem Destillationsrückstand aus der Umesterung nativer Fettsäureester

verwendet wurde.

Zur Prüfung der Schmiereigenschaften wurde die elliptische Abriebfläche auf der Prüfrolle (in mm²) sowie die Temperatur der Prüfflüssigkeit nach dem Test (in °C) bestimmt.

In den Vergleichsbeispielen 3, 4 und 5 wurde jeweils 1 Gew.-% der jeweiligen Komponente zugesetzt.

Die Ergebnisse sind der nachfolgenden Tabelle 1 zu entnehmen.

## Tabelle 1

Prüfergebnisse mit der Reibverschleißwaage nach Reichert, Vgl.-Bsp. 1 - 5.

| Vgl.-Bsp. | Testmedium | Additiv | Abrieb-fläche (mm²) | Temp. nach Test (°C) |
|---|---|---|---|---|
| 1 | Wasser | - | 32,0 | 45-49 |
| 2a | Leitungswasser + Bentonit | - | 21,5 | 40-43 |
| 2b | KCl-Spülung | - | 9,1 | 38-42 |
| 2c | Salzwasser-Spülung | - | 5,4 | 43-44 |
| 3a | Leitungswasser + Bentonit | KieselsäureK320 | 21,0 | 44-46 |
| 3b | KCl-Spülung | " | 6,1 | 35-36 |
| 3c | Salzwasser-Spülung | " | 4,2 | 29,34 |
| 4a | Leitungswasser + Bentonit | Tallölfettsäure | 1,9 | ca.25[1] |
| 4b | KCl-Spülung | " | 5,4 | 23-28[1] |
| 4c | Salzwasser-Spülung | " | 3,9 | 28-33[1] |
| 5a | Leitungswasser + Bentonit | Fettsäureester-Rückstand | 1,5 | ca.23[2] |
| 5b | KCl-Spülung | " | 5,0 | 25-28[2] |
| 5c | Salzwasser-Spülung | " | 2,0 | 24[2] |

Anm.: [1] schäumt zu stark.

[2] die Mischung erstarrt bei tieferen Temperaturen; Stockpunkt ca. + 10 °C

In den nachfolgenden Beispielen gemäß der Erfindung wurden folgende Additive den jeweiligen Testmedien bzw. Spülungen zugesetzt:

A: Kieselsäure K320 + Isobutyloleat;

B: Kieselsäure K320 + Isobutyloleat + Fettsäuremethylesterrückstand;

C: Kieselsäure K320 + Kokosfettsäuremethylester + Fettsäuremethylesterrückstand;

D: Kieselsäure K320 + Fettsäuremethylesterrückstand;

E: Kieselsäure K320 + Fettsäuremethylesterrückstand + Calciumstearat;

F: Kieselsäure K320 + Fettsäuremethylesterrückstand + geschwefelte Tallölfettsäure;

G: Kieselsäure K 320 + Polyolester, aus Pentaerythrit und Kokosfettsäure.

In den nachfolgenden Beispielen wurden die genannten Additive (A) bis (G) jeweils in Gesamtmengen von 1 Gew.-%, bezogen auf die gesamte Spülung, zugesetzt.

Beispiel 1

Die Schmiereigenschaften der Additive (A) bis (G) wurden mit der Reibverschleißwaage nach Reichert in Leitungswasser + Bentonit als Testmedium/Spülung geprüft. Die Ergebnisse (Abriebflächen und Temperatur des Testmediums nach dem Test) sind der nachfolgenden Tabelle 2 zu entnehmen.

Tabelle 2

| Prüfergebnisse mit der Reibverschleißwaage nach Reichert, Bsp. 1: Leitungswasser-/Bentonit-Spülung. | | |
|---|---|---|
| Additiv | Abriebfläche (mm) | Temperatur nach Test (°C) |
| A | 1,8 | ca. 26 |
| B | 1,5 | ca. 24 |
| C | 1,2 | ca. 23 |
| D | 1,3 | ca. 22 |
| E | 1,6 | ca. 25 |
| F | 1,2 | ca. 23 |
| G | 1,4 | ca. 22 |

Ergebnis:

Wie ein Vergleich der Ergebnisse des vorliegenden Beispiels mit den Ergebnissen der Vergleichsbeispiele 1 bis 5 zeigt, zeigen die erfindungsgemäßen Additive hervorragende Schmiereigenschaften, die in einer gegenüber den Vergleichsbeispielen deutlich verminderten Abriebfläche resultieren. Zudem sind die durch die Gleitreibungswärme bedingten Temperaturen nach dem Test deutlich niedriger als die Temperaturen der nicht mit einem Additiv versehenen Testmedien entsprechend den Vergleichsbeispielen 1 bis 5.

Beispiel 2

Unter denselben Bedingungen wie in Beispiel 1 wurden die Additive (A) bis (G) in einer KCl-Spülung als Testmedium/Spülung auf ihre Schmiereigenschaften untersucht. Die Ergebnisse sind der nachfolgenden Tabelle 3 zu entnehmen.

Tabelle 3

| Prüfergebnisse mit der Reibverschleißwaage nach Reichert, Bsp. 2: KCL-Spülung. | | |
|---|---|---|
| Additiv | Abriebfläche (mm) | Temperatur nach Test (°C) |
| A | 5,4 | 26-29 |
| B | 5,3 | 26-28 |
| C | 5,1 | ca.26 |
| D | 5,3 | 26-28 |
| E | 5,3 | ca.27 |
| F | 5,0 | ca.26 |
| G | 5,3 | ca.27 |

Ergebnis:

Auch in einer KCl-Spülung zeigen die erfindungsgemäßen Additive eine deutliche Verminderung der Reibung durch gegenüber Additiv-freien Spülungen verbesserte Schmiereigenschaften. Die Temperaturen der Prüfmedien nach dem Test liegen deutlich niedriger als ohne Additivzusatz.

Beispiel 3

Nach dem in den Beispielen 1 und 2 durchgeführten Testverfahren wurden die Additive (A) bis (G) auch in einer Salzwasser-Spülung auf ihre Schmiereigenschaften hin untersucht. Die Ergebnisse sind der nachfolgenden Tabelle 4 zu entnehmen.

Tabelle 4

| Prüfergebnisse mit der Reibverschleißwaage nach Reichert, Bsp. 3: Salzwasser-Spülung. | | |
|---|---|---|
| Additiv | Abriebfläche (mm) | Temperatur nach Test (°C) |
| A | 2,3 | 25 |
| B | 2,2 | 25 |
| C | 2,2 | 25 |
| D | 2,3 | 27 |
| E | 2,4 | 28 |
| F | 1,9 | 24 |
| G | 2,2 | 25 |

Ergebnis:

Auch bei der Prüfung der Schmiereigenschaften in einer Salzwasser-Spülung zeigten die erfindungsgemäßen pulverförmigen Additive eine gegenüber der Additiv-freien Spülung deutlich verbesserte Schmierleistung.

In allen drei Beispielen zeigt sich auch deutlich, daß die erfindungsgemäßen Additive auch gegenüber Kieselsäure allein (Vergleichsbeispiel 3), gegenüber Tallölfettsäure als Additiv nach dem Stand der Technik (Vergleichsbeispiel 4) und gegenüber einem Destillationsrückstand aus der Umesterung nativer Fettsäure als alleinigem Additiv (Vergleichsbeispiel 5) deutlich verbesserte Schmiereigenschaften in der Prüfung auf der Reibverschleißwaage nach Reichert zeigen. Die Bohrspülungen gemäß Vergleichsbeispiel 4 erweisen sich im Hinblick auf ihr starkes Schäumen als ungeeignet im Sinne der Aufgabenstellung der vorliegenden Erfindung; diejenigen des Vergleichsbeispiels 5 im Hinblick auf ihren relativ hohen Stockpunkt.

8

Beispiel 4

Eine weitere, sehr praxisnahe Überprüfung der Schmiereigenschaften ließ sich mit einem sogenannten "Lubricity-Tester" vornehmen. Mit diesem Gerät kann die Reibung von Gesteinskernen gegen eine sich drehende Metallplatte gemessen werden, wobei die Reibfläche mit Bohrflüssigkeit umspült wird und die Gesteinskerne unterschiedlich stark gegen die Metallplatte angedrückt werden. Bei konstantem Antrieb der Metallplatte ergibt sich die Schmierwirkung aus dem auf die auslenkbar gelagerten Gesteinsproben ausgeübten Drehmoment. Bei guter Schmierwirkung wird nur ein kleiner Drehmoment gemessen; bei schlechter Schmierwirkung ist der Wert für das Drehmoment sehr groß. In der nachfolgenden Tabelle ist jeweils der sogenannte "Reibbeiwert $\mu$" angegeben, der mit dem Drehmoment durch folgende Gleichung verknüpft ist:

$$\mu = \frac{M}{h \cdot F}$$

In der genannten Formel steht

$\mu$    für den Reibbeiwert,

M    für das Drehmoment,

h    für die Länge des Hebelarms und

F    für die Andruckkraft.

Mit Hilfe des oben beschriebenen "Lubricity-Testers" wurden folgende Schmiermittel, die teilweise bestimmte Schmiermitteladditive enthielten, in einer Bentonit-Wasser-Spülung geprüft, wobei in den Spülungen auf 1 l Leitungswasser (16°dH) jeweils 40 g Bentonit und - sofern ein Schmiermittelzusatz vorgesehen war - 5 bis 10 g eines Schmiermittels (genaue Konzentrationsangaben nachfolgend) enthalten waren:

I:    ohne Schmiermittelzusatz;

II:    10 g/l Tallölfettsäure;

III:    10 g/l Fettsäuremethylester-Destillationsrückstand;

IV:    5 g/l Kieselsäure K 320 + Fettsäuremethylester-Destillationsrückstand;

V:    5 g/l Kieselsäure K 320 + Fettsäuremethylester-Destillationsrückstand + Calciumstearat;

VI:    5 g/l Kieselsäure K 320 + Fettsäuremethylester-Destillationsrückstand + Aluminiumstearat; und

VII:    5 g/l Kieselsäure K 320 + Fettsäuremethylester-Destillationsrückstand + Kokosfettsäuremethylester.

Die Bohrspülungen gemäß I bis III sind Vergleichsbeispiele; die Bohrspülungen IV bis VII entsprechen der vorliegenden Erfindung.

Die Ergebnisse der Überprüfung der Schmiereigenschaften mit dem "Lubricity-Tester" bei unterschiedlichen Reibgeschwindigkeiten sind in der folgenden Tabelle 5 wiedergegeben.

Tabelle 5

| Prüfung der Schmiereigenschaften im "Lubricity-Tester" | | | | |
|---|---|---|---|---|
| Schmier-mittel-Additiv | Reibbeiwerte $\mu$ bei Reibgeschwindigkeiten von | | | |
| | 0,5 m/sec | 1.0 m/sec | 2,0 m/sec | 3,0 m/sec |
| I | 0,35 | 0,15 | 0,10 | 0,06 |
| II | 0,15 | 0,10 | 0,07 | 0,05 |
| III | 0,09 | 0,05 | 0,03 | 0,025 |
| IV | 0,07 | 0,035 | 0,025 | 0,015 |
| V | 0,07 | 0,03 | 0,025 | 0,02 |
| VI | 0,05 | 0,025 | 0,015 | 0,01 |
| VII | 0,05 | 0,025 | 0,015 | 0,01 |

Ergebnis:

Wie ein Vergleich der Schmiereigenschaften der einzelnen Bohrflüssigkeiten bei unterschiedlichen Reibgeschwindigkeiten ergibt, weisen die erfindungsgemäßen, Kieselsäuren und Esterkomponenten enthaltenden Bohrflüssigkeiten eine gute bis sehr gute Schmierwirkung auf; dies ergibt sich durch die kleinen Reibbeiwert-Werte, die auch geringen Drehmomenten (bei gleicher Länge des Hebelarms bzw. gleicher Größe der Andruckkraft) entsprechen. Die Unterschiede sind am prägnantesten bei kleinen Reibgeschwindigkeiten. Ferner ist hierbei zu beachten, daß der Schmiermittelzusatz in den Vergleichsbeispielen II und III doppelt so hoch ist wie in den erfindungsgemäßen Beispielen IV bis VII. Das in Beispiel 4 beschriebene Testverfahren ist genauer und praxisnäher als das in den Beispielen 1 bis 3 beschriebene Verfahren: Im Test gemäß Beispiel 4 wird die Reibung zwischen Gesteinskern und Metall bewertet, in den voranstehenden Beispielen hingegen die Reibung zwischen Metall und Metall.

**Patentansprüche**

1. Pulverförmige Schmiermittel-Additive für Bohrspülungen auf Wasserbasis, dadurch gekennzeichnet, daß sie

(a) 95 bis 30 Gew.-%, bezogen auf das Gesamtgewicht des Pulvers, hochdisperse Kieselsäuren,

(b) 5 bis 70 Gew.-%, bezogen auf das Gesamtgewicht des Pulvers, eines oder mehrerer Fettsäurealkylester der allgemeinen Formel (I)

$R^1COOR^2$     (I)

in der

$R^1$     für einen geradkettigen oder verzweigten, gesättigten oder einfach oder mehrfach ungesättigten Alkyl- oder Alkenylrest mit 11 bis 17 C-Atomen und

$R^2$     für einen geradkettigen oder verzweigten Alkylrest mit 1 bis 8 C-Atomen steht,

und/oder durch Umsetzung einer oder mehrerer mehrfunktioneller Hydroxyverbindungen aus der Gruppe Ethylenglykol, Propylenglykol, Glycerin, Trimethylolethan, Trimethylolpropan, Pentaerythrit, Sorbit, durch Selbstkondensation von Glycerin unter Wasserabspaltung herstellbare Polyole und Umsetzungsprodukte dieser Hydroxyverbindungen mit Ethylenoxid und/oder Propylenoxid, mit einer oder mehreren Carbonsäuren der allgemeinen Formel (II)

RCOOH

in welcher R für einen geradkettigen oder verzweigten, gesättigten bzw. einfach oder mehrfach ungesättigten Alkyl- bzw. Alkenylrest mit 5 bis 21 C-Atomen steht, erhältliche Polyolester, und/oder Destillationsrückstände aus der Umesterung nativer Fettsäureester, und

(c) gegebenenfalls weitere, für Schmierzwecke bekannte Zusätze in Mengen von 0 bis 20 Gew.-%, bezogen auf das Gesamtgewicht des Pulvers,

enthalten.

2. Additive nach Anspruch 1, dadurch gekennzeichnet, daß sie als Komponente (a) 60 bis 40 Gew.-% Fällungskieselsäuren oder pyrogene oder pyrogen-hydrophobierte Kieselsäuren enthalten.

3. Additive nach Ansprüchen 1 und 2, dadurch gekennzeichnet, daß sie 40 bis 60 Gew.-% der Komponenten (b) enthalten.

4. Additive nach Ansprüchen 1 bis 3, dadurch gekennzeichnet, daß sie mehrere Fettsäurealkylester mit geradkettigen Alkyl- oder Alkenylresten von Fettsäuren aus nativen Quellen enthalten.

5. Additive nach Anspruch 4, dadurch gekennzeichnet, daß sie mehrere Fettsäurealkylester mit geradkettigen Alkylresten aus der Gruppe Kokosalkyl und Talgalkyl enthalten.

6. Additive nach Ansprüchen 1 bis 5, dadurch gekennzeichnet, daß sie mehrere Fettsäurealkylester der allgemeinen Formel (I) enthalten, in der $R^2$ für Methyl, Ethyl, n-Propyl oder i-Propyl steht.

**7.** Additive nach Ansprüchen 1 bis 6, dadurch gekennzeichnet, daß sie als Fettsäurealkylester-Komponente Mischungen von Fettsäurealkylestern der allgemeinen Formel (I), in der $R^1$ und $R^2$ die oben angegebenen Bedeutungen haben, und von Destillationsrückständen aus der Umesterung nativer Fettsäureester im relativen Gewichtsverhältnis 0 : 100 bis 100 : 0 Gew.-Teile enthalten.

**8.** Additive nach Ansprüchen 1 bis 7, dadurch gekennzeichnet, daß sie als weitere Schmierzusätze Metallseifen, geschwefelte Fettsäuren und deren Derivate und/oder geblasene Öle enthalten.

**9.** Additive nach Anspruch 8, dadurch gekennzeichnet, daß sie als weitere Schmierzusätze Metallseifen aus der Gruppe Aluminiumstearat, Calciumstearat und Magnesiumstearat enthalten.

**10.** Verwendung der pulverförmigen Additive nach Ansprüchen 1 bis 9 in Bohrspülungen im Drillingbereich in Mengen von 0,01 bis 5 Gew.-%, bezogen auf das Gesamtgewicht der Spülungen.

**11.** Verwendung der pulverförmigen Additive nach Ansprüchen 1 bis 9 in Bohrspülungen im Bereich von Erdölbohrungen.

**12.** Verwendung nach Ansprüchen 10 und 11, dadurch gekennzeichnet, daß die pulverförmigen Additive in den Bohrspülungen in Mengen von 0,1 bis 2 Gew.-% enthalten sind.

**Claims**

**1.** Powder-form lubricant additives for water-based drilling fluids, characterized in that they contain
  (a) 95 to 30% by weight, based on the total weight of the powder, of highly disperse silicas,
  (b) 5 to 70% by weight, based on the total weight of the powder, of one or more fatty acid alkyl esters corresponding to general formula (I)

$$R^1COOR^2 \qquad (I)$$

  in which
    $R^1$    represents a linear or branched, saturated or mono- or polyunsaturated alkyl or alkenyl radical containing 11 to 17 carbon atoms and
    $R^2$    represents a linear or branched alkyl radical containing 1 to 8 carbon atoms,
  and/or polyol esters obtainable by reaction of one or more polyfunctional hydroxy compounds from the group consisting of ethylene glycol, propylene glycol, glycerol, trimethylol ethane, trimethylol propane, pentaerythritol, sorbitol, polyols obtainable by self-condensation of glycerol with elimination of water and reaction products of these hydroxy compounds with ethylene oxide and/or propylene oxide with one or more carboxylic acids corresponding to general formula (II)

$$RCOOH$$

  in which R represents a linear or branched, saturated or mono- or polyunsaturated alkyl or alkenyl radical containing 5 to 21 carbon atoms, and/or distillation residues from the transesterification of native fatty acid esters and
  (c) optionally other additives known for lubricating additives in quantities of 0 to 20% by weight, based on the total weight of the powder.

**2.** Additives as claimed in claim 1, characterized in that they contain 60 to 40% by weight precipitated silicas or pyrogenic or pyrogenic and hydrophobicized silicas as component (a).

**3.** Additives as claimed in claims 1 and 2, characterized in that they contain 40 to 60% by weight of components (b).

**4.** Additives as claimed in claims 1 to 3, characterized in that they contain several fatty acid alkyl esters bearing linear alkyl or alkenyl radicals of fatty acids from native sources.

**5.** Additives as claimed in claim 4, characterized in that they contain several fatty acid alkyl esters containing linear alkyl radicals from the group comprising coconut oil alkyl and tallow alkyl.

EP 0 255 605 B1

**6.** Additives as claimed in claims 1 to 5, characterized in that they contain several fatty acid alkyl esters corresponding to general formula (I) in which $R^2$ represents methyl, ethyl, n-propyl or i-propyl.

**7.** Additives as claimed in claims 1 to 6, characterized in that they contain mixtures of fatty acid alkyl esters corresponding to general formula (I), in which $R^1$ and $R^2$ are as defined above, and distillation residues from the transesterification of native fatty acid esters in a ratio by weight of 0:100 to 100:0 parts by weight as the fatty acid alkyl ester component.

**8.** Additives as claimed in claims 1 to 7, characterized in that they contain metal soaps, sulfurized fatty acids and derivatives thereof and/or blown oils as further lubricating additives.

**9.** Additives as claimed in claim 8, characterized in that they contain metal soaps from the group consisting of aluminium stearate, calcium stearate and magnesium stearate.

**10.** The use of the powder-form additives claimed in claims 1 to 9 in drilling fluids in quantities of 0.01 to 5% by weight, based on the total weight of the drilling fluids.

**11.** The use of the powder-form additives claimed in claims 1 to 9 in drilling fluids for oil wells.

**12.** The use claimed in claims 10 and 11, characterized in that the powder-form additives are present in the drilling fluids in quantities of 0.1 to 2% by weight.

**Revendications**

**1.** Additifs lubrifiants en poudre pour liquides de forage à base aqueuse, caractérisés en ce qu'ils contiennent
(a) 95 à 30 % en poids, par rapport au poids total de la poudre, d'acides siliciques hautement dispersés,
(b) 5 à 70% en poids, par rapport au poids total de la poudre, d'un ou plusieurs esters alkyliques d'acides gras répondant à la formule générale (I)

$R^1COOR^2$     (I)

dans laquelle
$R^1$     représente un reste alkyle ou alcényle avec 11 à 17 atomes de carbone, à chaîne linéaire ou ramifiée, saturé ou mono- ou polyinsaturé , et
$R^2$     représente un reste alkyle à chaîne linéaire ou ramifiée avec 1 à 8 atomes de carbone,
et/ou des polyesters pouvant être obtenus en faisant réagir un ou plusieurs composés hydroxy polyfonctionnels du groupe comportant l'éthylèneglycol, le propylèneglycol, la glycérine, le triméthyloléthane, le triméthylolpropane, la pentaérythrite, la sorbite, des polyols pouvant être fabriqués par auto-condensation de glycérine avec séparation d'eau, et des produits de réaction de ces composés hydroxy avec l'oxyde d'éthylène et/ou l'oxyde de propylène, avec un ou plusieurs acides carboxyliques de formule générale (II)

RCOOH

dans laquelle R signifie un reste alkyle ou alcényle avec 5 à 21 atomes de carbone, à chaîne linéaire ou ramifiée, saturé ou mono- ou polyinsaturé, et/ou des résidus de distillation de la transestérification d'esters natifs d'acides gras, et
(c) éventuellement d'autres additifs connus pour des buts de lubrification en quantités de 0 à 20 % en poids, par rapport au poids total de la poudre.

**2.** Additifs selon la revendication 1, caractérisés en ce qu'ils contiennent comme composant (a) 60 à 40 % en poids d'acides siliciques de précipitation ou des acides siliciques pyrogènes ou rendus hydrophobes par pyrogénation.

**3.** Additifs selon les revendications 1 et 2, caractérisés en ce qu'ils contiennent 40 à 60 % en poids de composants (b).

12

4. Additifs selon les revendications 1 à 3, caractérisés en ce qu'ils contiennent plusieurs esters alkyliques d'acides gras avec des restes alkyle ou alcényle à chaîne linéaire d'acides gras de sources natives.

5. Additifs salon la revendication 4, caractérisés en ce qu'ils contiennent plusieurs esters alkyliques d'acides gras avec des restes alkyle à chaîne linéaire du groupe comportant l'alkyle de coco et l'alkyle de suif.

6. Additifs selon les revendications 1 à 5, caractérisés en ce qu'ils contiennent plusieurs esters alkyliques d'acides gras de formule générale (I) dans laquelle $R^2$ signifie méthyle, éthyle, n-propyle ou i-propyle.

7. Additifs selon les revendications 1 à 6, caractérisés en ce qu'ils contiennent comme composants esters alkyliques d'acides gras, des mélanges d'esters alkyliques d'acides gras de formule (I) dans laquelle $R^1$ et $R^2$ possèdent les significations décrites ci-dessus, et de résidus de distillation de la transestérification d'esters natifs d'acides gras dans un rapport pondéral de 0:100 à 100:0 parties en poids.

8. Additifs selon les revendications 1 à 7, caractérisés en ce qu'ils contiennent comme autres additifs lubrifiants des savons métalliques, des acides gras sulfurés et leurs dérivés et/ou des huiles soufflées.

9. Additifs selon la revendication 8, caractérisés en ce qu'ils contiennent comme autres additifs lubrifiants des savons métalliques du groupe comportant le stéarate d'aluminium, le stéarate de calcium et le stéarate de magnésium.

10. Utilisation des additifs pulvérulents selon les revendications 1 à 9 dans des liquides de forage dans le domaine du forage, à raison de 0,01 à 5 % en poids par rapport au poids total des liquides.

11. Utilisation des additifs pulvérulents selon les revendications 1 à 9 dans des liquides de forage dans le domaine des forages pétroliers.

12. Utilisation selon les revendications 10 et 11, caractérisée en ce que les additifs pulvérulents sont présents dans les liquides de forage à raison de 0,1 à 2 % en poids.